# EUROPÄISCHE PATENTSCHRIFT

(11) **EP 0 463 007 B1**
(45) Veröffentlichungstag und Bekanntmachung des Hinweises auf die Patenterteilung: **24.08.1994**
(21) Anmeldenummer: 90904236.8
(22) Anmeldetag: 17.03.1990
(51) Int. Cl.: A01M 7/00, B05B 9/06

(54) **GERÄT ZUM APPLIZIEREN VON PFLANZENBEHANDLUNGSMITTELN**
DEVICE FOR APPLYING PLANT TREATMENT AGENTS
DISPOSITIF POUR APPLIQUER DES AGENTS TRAITANT LES VEGETAUX

(30) Priorität: 18.03.1989 DE 3908963
(43) Veröffentlichungstag der Anmeldung: 02.01.1992
(73) Patentinhaber: LINDNER, Günter, D-53902 Bad Münstereifel (DE)
(72) Erfinder: LINDNER, Günter, D-53902 Bad Münstereifel (DE)
(74) Vertreter: Koch, Theodor, Dipl.-Phys.
(86) Internationale Anmeldenummer: DE9000205
(87) Internationale Veröffentlichungsnummer: WO9011010

(56) Entgegenhaltungen:
- EP-A- 0 201 981
- WO-A-88/06404
- DE-A- 3 140 441
- DE-A- 3 316 919
- DE-U- 8 509 175
- US-A- 4 714 196
- US-A- 4 805 088

## Beschreibung

Die Erfindung bezieht sich auf ein fahrbares Spritzgerät in Form eines mittels einer Zugmaschine verfahrbaren Anhängers oder einer Einheit zum direkten Anbau an eine Landmaschine, zum Applizieren von Pflanzenbehandlungsmitteln mit einer Spritzvorrichtung, die aus einem Spritzgestänge und einer Anzahl von an dieser vorgesehenen, mit jeweils einer Vielzahl von Spritzdüsen besetzten Teilbreiten besteht, mit Tanks für jedes Spritzmittelkonzentrat sowie für eine Verdünnungsflüssigkeit, insbesondere Wasser, mit Mitteln zum dosierten Einspritzen des oder der Konzentrate in eine über eine Druckwasserpumpe mit Verdünnungsflüssigkeit versorgte Mischkammer, wobei während des Betriebs über eine Rechen- und Steuereinheit unter Berücksichtigung der je Flächeneinheit auszubringenden Menge des bzw. der Behandlungsmittel die Steuerung der Dosierpumpe oder -pumpen abhängig von den Fahrgeschwindigkeitsänderungen des Spritzgerätes so erfolgt, daß die durch die Spritzdüsen applizierte Ausbringung des Konzentrats pro Flächeneinheit konstant bleibt und wobei das Konzentrat erst bei Überschreiten eines Mindestausstoßdruckes in den Mischbehälter ausgestoßen wird.

Ein Spritzgerät dieser Art ist gemäß der internationalen Patentanmeldung WO 88/06 404 A1 bekannt. Über eine durch einen Schrittmotor einstellbare Präzisionsdosierpumpe wird dabei das Konzentrat und desses Verdünnungsflüssigkeit (Wasser) einer Mischkammer zugeführt, deren Auslaß mit den einzelnen Teilbreiten des Spritzgestänges in Verbindung steht. Durch eine Kontrolleinheit wird dabei die Präzisionsdosierpumpe in Abhängigkeit von der Fortbewegungsgeschwindigkeit des Spritzgerätes und der Menge der Verdünnungsflüssigkeit gesteuert. Die Pumpe für die Verdünnungsflüssigkeit (Wasser) wird dabei in Abhängigkeit von der Fahrgeschwindigkeit angetrieben, eine Beeinflussung der Wassermenge oder des Wasserdruckes erfolgt nicht. Lediglich die die Druckleitung durchfließende Wassermenge wird an der Druckleitung mit einem Sensor abgegriffen und in die Kontrolleinheit zur Beeinflussung der Zugabe des Konzentrates des Pflanzenbehandlungsmittels verarbeitet.

Der Druck der Verdünnungsflüssigkeit in der Druckleitung stellt sich daher bei konstantem Ausflußquerschnitt entsprechend der sich mit der Fahrgeschwindigkeit ändernden Fördermenge der Pumpe ein. Er ist also ebenso wie die Wasserförderung pro Zeiteinheit nicht konstant. Insofern variiert auch die Tröpfchengröße am Austritt der Spritzdüsen.

Die Einrichtung aus dem Vorratsgefäß für ein Spritzmittelkonzentrat, dessen Dosierpumpe und der Mischkammer beliefert dabei die Gesamtheit der an dem Spritzgestänge vorhandenen bzw. der im Betrieb befindlichen Spritzdüsen mit Spritzmittel. Es ergeben sich somit für die einzelnen Teilbreiten des Spritzgestänges unterschliedliche Längen der Leitungswege bis zu den einzelnen Spritzdüsen je nach Breite der einzelnen Teilbreiten und der Länge der Zuleitungen zu den einzelnen Verteilungen dieser Teilbreiten.

Die unterschiedliche Länge der Zuleitungen zu den einzelnen Teilbreiten und den Spritzdüsen ist dabei dann von Nachteil, wenn größere Geschwindigkeitsänderungen oder andere Gründe zur plötzlichen Änderung der Dosierung des Konzentrates in der Verdünnungsflüssigkeit gegeben sind. Bei einer Änderung der Dosierung steht somit nicht gleichzeitig bei allen Spritzdüsen gleichdosiertes Spritzmittel an. Dies gilt auch bezüglich der Einspeisung von zusätzlichen Pflanzenbehandlungsmitteln, welche insofern nicht gleichzeitig an einer bestimmten zu behandelnden Stelle des Feldes über alle Düsen und Teilbreiten zugeführt werden können.

Die Dosierung mit einer Präzisionsdosierpumpe gemäß der WO 88/06 404 A1, welche durch die Fahrgeschwindigkeit und den Durchfluß der Verdünnungsflüssigkeit zur Mischkammer gesteuert wird, ist dabei technisch recht aufwendig.

Generell wird zum Applizieren von Pflanzenbehandlungsmitteln vor allem zur ganzflächigen Behandlung im Getreideanbau und im Hackfruchtanbau die zu applizierende Spritzbrühe dadurch aufgearbeitet, daß die notwendige Wassermenge bzw. Verdünnungsflüssigkeit mit der erforderlichen Menge des oder der Pflanzenbehandlungsmittel in einem Behälter des Spritzgerätes aufbereitet wird. In der Regel erfolgt dabei die Applikation bei einem bestimmten Spritzdruck und einer bestimmten einzuhaltenden Fahrgeschwindigkeit. Lediglich bei mit einer Druckregelung für den Spritzdruck ausgestatteten Spritzgeräten ist dabei eine Veränderung der Fahrgeschwindigkeit möglich. Die Angleichung der Ausbringung bzw. der vorgeschriebenen Aufbringung des Pflanzenbehandlungsmittels erfolgt dabei durch Druckerhöhung bzw. -reduzierung bei der Ausbringung der bereits im Behälter aufbereiteten Spritzbrühe.

Statt einer Druckregelung kann dabei auch eine Durchflußregelung erfolgen.

Die Spritzbrühe bzw. das auszubringende Spritzgut besteht dabei in der Regel aus einer wässrigen Pflanzenbehandlungsmittellösung, einer Pflanzenbehandlungsmittel/Wasser-Emulsion oder einer Pflanzenbehandlungsmittel/Wasser-Suspension.

Die Spritzgeräte bestehen dabei im wesentlichen aus einem Vorratsbehälter, einem Rührwerk, einer Pumpe, einem Spritzgestänge mit Spritzdüsen und Bedieneinrichtungen.

Der Vorratsbehälter hat üblicherweise ein Volumen von 600 l - 3000 l. In ihm ist das Pflanzenbehandlungsmittel in einer vom Spritzmittelhersteller angegebenen Konzentration für die Ausbringung. Um eine gleichmäßige Verteilung des Pflanzenbehandlungsmittels im Vorratsbehälter zu erlangen, ist ein Rührwerk an dem Vorratsbehälter angebracht. Gerade bei Verwendung einer Emulsion oder Suspension sorgt es für eine bleibende gleichmäßige Verteilung des Pflanzenbehandlungsmittels in der Spritzbrühe bzw. in dem auszubringenden Spritzgut. Die Spritzbrühe wird dabei mit einer Pumpe zu den Spritzdüsen gefördert. Diese hat üblicherweise einen Fördervolumenstrom von 65 l/min - 320 l/min. Zudem sorgt sie für den erforderlichen Spritzdruck von maximal 6 bar. Sie wird über die Zapfwelle der Zugmaschine bzw. Landmaschine angetrieben.

Die Verteilung der Spritzbrühe übernimmt das Spritzgestänge mit den Spritzdüsen. Das Spritzgestänge ist für den Transport klappbar ausgeführt. Es ist in sogenannten Teilbreiten aufgeteilt, die jeweils 2 - 4,5 m breit sein können. Alle 0,5 m ist eine Spritzdüse angebracht, so daß die Teilbreiten je nach Ausführung mindestens 4 (bei 2 m Breite), höchstens 9 (bei 4,5 m Breite) Spritzdüsen aufweisen.

Eine korrekte Dosierung bzw. Aufbringung des Pflanzenbehandlungsmittels in der auszubringenden Spritzbrühe ist bei diesen bekannten Spritzgeräten problematisch. Es gilt dabei, folgende Bedingungen einzuhalten:
1. Das Pflanzenbehandlungsmittel muß mit der vom Hersteller vorgeschriebenen Dosierung und der entsprechenden Menge Wasser vermischt werden. Die Herstellerangabe wird üblicherweise in l/ha angegeben. Dies bedingt ein exaktes Auslitern bzw. Auswiegen der benötigten Pflanzenbehandlungsmittel-Menge. Zusätzlich muß die benötigte Wassermenge anhand des Pumpendruckes, der Fahrgeschwindigkeit und der Nutzflächengröße bestimmt werden. Diese aufwendige Rechnung birgt Fehlerquellen.
2. Der Pumpendruck zur Förderung der Spritzbrühe bzw. der Verdünnungsflüssigkeit ist geregelt, so daß die Pumpe sowohl bei der Querschnittsregelung als auch bei Druckregelung immer einen konstanten, maximal ausgelegten Druck zur Verfügung stellt, den sie unter den bestehenden Betriebsbedingungen aufbauen kann.
   Es wird dabei in der Regel eine Verdrängerpumpe verwendet, deren Fördervolumen von der Antriebsdrehzahl, also der Drehzahl der Zapfwelle der Zugmaschine, und damit von Fahrgeschwindigkeit abhängig ist. Die Spritzdüsen hingegen haben einen festen Querschnitt, so daß eine von der Fahrgeschwindigkeit abhängige Druckdifferenz über ihnen entsteht. Dies führt zum einen zu unkorrekter Dosierung. Da das Tropfenspektrum einer Zerstäuberdüse andererseits wesentlich von der Druckdifferenz abhängt, die über ihren Zu- und Abfluß gegeben ist, ergibt sich bei einer Druckänderung oder Durchflußänderung zudem die Gefahr, daß zu kleine Tröpfchen gebildet werden und damit eine Abdrift des Sprühnebels entsteht.
3. Da die Fahrgeschwindigkeit als Paramter beim Auslitern bzw. Auswiegen des benötigten Pflanzenbehandlungsmittels einfließt, muß die Fahrgeschwindigkeit für eine korrekte Dosierung unbedingt eingehalten werden. Weicht die Geschwindigkeit von der Vorgabe ab, folgt zwangsläufig eine Über- bzw. Unterdosierung. Die Fahrgeschwindigkeit kann jedoch nur sehr schwer exakt konstant gehalten werden. Es ergibt sich insofern die Gefahr einer Fehldosierung mit allen Folgen für die Pflanzen (Fleckbildung auf den Pflanzenblättern, Absterben) und die Umwelt (Grundwasserbelastung). Um dennoch die gesamte Ackerfläche behandeln zu können, muß eine gewisse Reserve des Pflanzenbehandlungsmittels mit einkalkuliert werden. Reste davon müssen nach Beendigung des Spritzvorganges unweltgerecht entsorgt werden.
4. Für eine gleichzeitige Ausbringung von mehreren Pflanzenbehandlungsmitteln ist deren Mischbarkeit untereinander Voraussetzung. Die Spritzmittelhersteller geben jedoch allenfalls die Mischbarkeit eigener Produkte an, nicht aber die mit Produkten anderer Hersteller. Ein "mehrfaches Überfahren" der Ackerfläche und damit erhöhter Zeitaufwand ist daher bei Anwendung mehrerer Spritzmittel erforderlich.
5. Nach Beendigung des Spritzvorganges muß das Gerät manuell gereinigt werden. Dies ist zeitaufwendig und birgt vor allem Gefahren für den Anwender, da die Spritzmittel in der Regel giftig sind. Zudem können die Reste üblicherweise nicht dem Abwasser zugeführt werden, so daß die umweltgerechte Entsorgung ein weiteres Problem darstellt.

Gemäß der DE-OS 33 16 919 ist eine weitere Ausführungsform von Spritzgeräten bekannt, bei welchen eine Regelung des Spritzdruckes der Spritzbrühe durch bloße Regelung des Förderdruckes der Verdünnungsflüssigkeit entsprechend der Fahrgeschwindigkeit und spätere Beimischung des Konzentrates erfolgt. Die Zuführung des Verdünnungsmittels erfolgt dabei über ein gesteuertes Absperrventil. Die Dosierung des Konzentrates erfolgt dabei über ein Einspeiseventil, welches hinter dem Absperrventil angeordnet und mit diesem so verbunden ist, daß eine gleichmäßige Einspeisung von Konzentrat in das Verdünnungsmittel gewährleistet ist.

Insofern ist eine Fehlausbringung durch eine Änderung der Fahrgeschwindigkeit verhindert, wobei sich generell aber die vorab erwähnten Nachteile ergeben und die Gefahr einer Fehldosierung insofern weiter vorliegen kann, als bei einer vorzunehmenden Änderung der Konzentration der Spritzbrühe bzw. Änderung der Dosierung des Pflanzenbehandlungsmittels in der Verdünnungsflüssigkeit zunächst weiterhin die Spritzbrühe in der alten Konzentration mit der ursprünglichen Dosierung des Pflanzenbehandlungsmittels ausgebracht wird.

Ferner besteht die Gefahr, daß sich zu kleine Tröpfchen ausbilden, so daß auch bei diesem System generell die Gefahr von Fehldosierungen, insbesondere örtlicher Unter- oder Überdosierungen, aufgrund sich über den Spritzdüsen ausbildender unterschiedlicher Druckdifferenzen, sowie einer Abdrift des Sprühnebels besteht.

Gemäß der DE-OS 31 40 441 ist es auch bekannt, Restmengen nach einem Spritzvorgang und die damit verbundenen Probleme dadurch zu vermeiden, daß mindestens je ein gesonderter Tank für das Konzentrat (Pflanzenbehandlungsmittel) und ein Tank für die Verdünnungsflüssigkeit (Wasser) vorgesehen ist und das Spritzgerät eine Dosierpumpe zum dosierten Einspeisen des Konzentrates in die Flüssigkeit aufweist. Zur Anpassung an unterschiedliche Geschwindigkeiten des Zugfahrzeuges ist dabei vorgesehen, die Dosierpumpe des Konzentrates proportional zur Fahrzeuggeschwindigkeit anzutreiben.

Als Dosierpumpe ist dabei eine Hubkolbenpumpe vorgesehen, deren Antrieb über ein mit einem Rad der Zugmaschine gekoppeltes Getriebe erfolgt. Es wird dabei ein Reibradgetriebe mit stufenlos verstellbarer Übersetzung verwendet. Die Förderkolben werden dabei durch auf einer Pumpenwelle angeordnete Nocken gegen Federrückstellung betätigt. Die Pumpenwelle läuft dabei in Lagern, in die exzentrische im Pumpengehäuse drehbare Halterungen angeordnet sind, wobei ein Anschlag zur Begrenzung des Rückhubes der Förderkolben vorgesehen ist. Durch Drehen der Halterungen läßt sich der Kolbenhub und damit die Fördermenge für das Konzentrat stufenlos einstellen. Die Dosierpumpe weist dabei ein Dosierventil mit einem Ventilkörper auf, der in der von einer Feder unterstützten Richtung von der Verdünnungsflüssigkeit und in Öffnungsrichtung - also auf der anderen Seite - von dem Konzentrat beaufschlagt ist, wobei der Ventilkörper zwei Ventilsitze aufweist, zwischen denen ein Ausgangskanal für das Gemisch aus der Verdünnungsflüssigkeit und dem Konzentrat angeordnet ist. Mit diesem Dosierventil wird gleichzeitig die Verdünnungsmittel- und die Konzentrationzufuhr zu der Spritzeinrichtung unterbrochen, wobei die Dosierpumpe kein Konzentrat fördert.
Erst beim Antrieb der Dosierpumpe wird der Ventilkörper durch den Druck des geförderten Konzentrates derart verschoben, daß er von beiden Ventilsitzen abhebt und Verdünnungsflüssigkeit und Konzentrat in den Ausgangskanal gelangen können. Der Ventilkörper weist dabei einen Bypaß-Kanal zur Überbrückung des Dosierventiles vom Zulauf der Verdünnungsflüssigkeit zum Ausgangskanal auf, der durch ein von außen betätigbares Ventil verschließbar ist. Durch Öffnen dieses Ventils kann der Ausgangskanal und die sich daran anschließende Spritzeinrichtung mit Verdünnungsflüssigkeit durchgespült werden, um sie von Spritzmittelrückständen zu befreien.

Auch bei diesem bekannten Spritzgerät ist der Pumpendruck der Verdünnungsflüssigkeit geregelt, das heißt, die Druckwasserpumpe stellt immer einen bestimmten, möglichst maximal ausgelegten Druck zur Verfügung, welchen diese unter den bestehenden Betriebsbedingungen (Fahrgeschwindigkeit, Nutzeflächengröße, vorgegebene Dosierung des Konzentrates, benötigte Wassermenge) momentan aufbauen kann, und welcher insofern veränderlich ist.
Ferner kann keine übergangslose Einstellung der Konzentration der Spritzbrühe bei einer vorzunehmenden Änderung der Dosierung des Pflanzenbehandlungsmittels erfolgen, da Reste im längeren Leitungsweg anstehen.
Der Aufbau und die Steuerung der verwendeten Pumpe für die Verdünnungsflüssigkeit und der Dosierpumpe zur Direkteinspeisung des Konzentrates in die Verdünnungsflüssigkeit ist dabei konstruktiv aufwendig. Es bedarf dabei einer mechanischen Übertragung der momentanen Drehgeschwindigkeit der Zapfwelle wobei Wellen-Nocken vorgesehen sind, welche die Förderkolben der verwendeten Dosierpumpen betätigen. Der Rückhub des Kolbens der als Einspritzpumpe ausgebildeten Dosierpumpe erfolgt dabei über eine Federrückstellung, wobei der Arbeitshub dieser Kolben mechanisch zur Anpassung des Hubvolumens an die vorgeschriebene Ausbringung des zu versorgenden Spritzgestänges zu verändern ist. Eine genaue Einstellung und Steuerung der Einspritzpumpen derart, daß mit der bloßen Änderung der Fahrgeschwindigkeit eine Angleichung des pro Flächeneinheit durch die Spritzdüsen applizierten Konzentrates bewirkt wird, so daß die Ausbringung des Konzentrates pro Flächeneinheit während des Betriebes der Feldspritze konstant bleibt, ist insofern unter vielen Betriebsbedingungen nicht möglich.

Ausgehend von einem fahrbaren Spritzgerät mit einer Kontrolleinrichtung zur geschwindigkeitsabhängigen Direkteinspeisung von Spritzmittelkonzentrat in die Verdünnungsflüssigkeit gemäß der internationalen Patentanmeldung WO 88/06404 A1 bezweckt die vorliegende Erfindung das Spritzgerät derart zu verbessern, daß die Gefahr von Fehldosierungen, insbesondere auch örtlicher Unter- oder Überdosierungen des zu applizierenden Pflanzenbehandlungsmittels (Konzentrat) zumindest weitgehend innerhalb der vom Biologischen Bundesamt vorgegebenen Grenzen nicht mehr gegeben ist, wobei ferner gleichzeitig mehrere Spritzmittel nebeneinander verarbeitet werden können, ohne daß die Mischbarkeit der Spritzmittel Voraussetzung ist. Es soll dabei eine hohe Dosiergenauigkeit des Konzentrates über die gesamten beaufschlagten Teilbreiten des Spritzgestänges erreichbar sein. Es soll dabei des weiteren eine weitgehend übergangslose Einstellung der Spritzbrühe in der gewünschten Konzentration über die gesamten beaufschlagten Teilbreiten bei einer vorzunehmenden Änderung der Dosierung des Konzentrates oder einer Änderung der Fahrgeschwindigkeit des Spritzgerätes erreichbar sein.

Ferner soll eine wirtschaftliche Einspeisung mit einer einfachen Antriebsregelung und Steuerung der Dosierpumpe möglich sein.

Zur Lösung dieser Aufgabe ist die Ausbildung eines fahrbaren Spritzgerätes zum Applizieren von Pflanzenbehandlungsmitteln gemäß Patentanspruch 1 vorgesehen.

Erfindungsgemäß erfolgt die Applizierung von Pflanzenbehandlungsmitteln als Spritzmittel unter Verwendung einer bloßen, der Pumpe der Verdünnungsflüssigkeit nachgeschalteten Gleichdruckarmatur über eine Querschnitts- und Durchflußregelung der Verdünnungsflüssigkeit zur Mischkammer, wobei dort insofern ein von Fahrgeschwindigkeitsänderungen unabhängiger, vor der Ausbringung feslegbarer, zeitlich gleichbleibender Druck bei gleichbleibender Menge der Verdünnungsflüssigkeit erzeugt wird. Die Dosierpumpen und die Mischkammern sind dabei jeweils unmittelbar an den einzelnen Teilbreiten separat entsprechend der Zahl der unterschiedlichen Spritzmittel angeordnet, so daß unter Vermeidung von Fehldosierungen insbesondere auch gleichzeitig mehrere Spritzmittel verarbeitet werden können, ohne daß die Mischbarkeit der Spritzmittel dazu Voraussetzung ist. Die Ausbringzeit und der Ausbringweg der in den einzelnen Mischkammern erzeugten Spritzmittel ist dabei äußerst kurz, wobei eine gleichmäßige Dosierung über alle Dosierpumpen erfolgt. Die Dosierpumpen sind dabei einzeln zu- und abschaltbar und aufgrund ihres identitischen Aufbaus exakt über eine einzige Rechen- und Steuereinheit gleichzeitig und gleichmäßig aussteuerbar.

Hierdurch sowie durch die verwendete Gleichdruckarmatur zur Querschnitts- und Durchflußregelung der Verdünnungsflüssigkeit und durch die Ausbildung der Dosierpumpen als Hubkolbenpumpen, deren Fördervolumen/Hub konstant und vor Fahrtbeginn einzeln einstellbar ist, welche über elektromagnetische Wandler mit veränderbarer Hubfrequenz in Abhängigkeit von der jeweiligen momentanen Fahrgeschwindigkeit antreibbar sind, läßt sich dabei eine übergangslose Einstellung der Konzentration des Spritzmittels und eine stufenlose Beigabe weiterer Pflanzenbehandlungsmittel über das gesamte Spritzgestänge erreichen.

Eine hohe Dosiergenauigkeit der Einspritzpumpe wird dabei dadurch erreicht, daß eine Kolbenpumpe verwendet wird, bei welcher der Kolbenhub für Teilbreiten während des Betriebes konstant ist, wobei also keine vollvolumengesteuerte Feindosierpumpe verwendet wird, sondern lediglich entsprechend der vorgeschriebenen Mischung und Ausbringung von l/ha des Konzentrates an Pflanzenbehandlungsmittel eine vorherige mechanische Einstellung des Kolbenhubes und somit des Fördervolumens erfolgen kann, wobei ferner die Kolbenpumpe mit konstanter Kolbengeschwindigkeit gefahren wird, dabei aber gleichzeitig eine Steuerung der Arbeitsfrequenz der Kolbenpumpe zur Erreichung der "geschwindigkeitsabhängigen Direkteinspeisung des Konzentrates" erfolgt. Im Gegensatz zum mechanischen Antrieb und Steuerung der Dosierpumpe gemäß der DE-OS 31 40 441 erfolgt dabei der Antrieb der erfindungsgemäß zu verwendenden Hubkolbenpumpe und deren Steuerung wie bei der WO 88/06404 A1 über eine Steuer- und Recheneinheit, welche erfindungsgemäß aber einen für den Antrieb vorgesehenen elektromagnetischen Wandler regelt. In Verbindung mit einer Konstantdruckregelung für die Verdünnungsflüssigkeit und damit für die nach Zumischung des Konzentrates entstehende Spritzbrühe wird dabei über die Dosierpumpen der Spritzeinrichtung in die jeweilige Mischkammer das Konzentrat erst nach Überschreiten eines Mindestausstoßdruckes eingespritzt. Dieser Mindestausstoßdruck ist dabei derart eingestellt, daß die Zumischung des Konzentrates erst bei einem Einspeisedruck erfolgt, welcher größer als der maximale Druck der in der Mischkammer anstehenden Verdünnungsflüssigkeit ist. Der Einspeisedruck wird somit unabhängig von dem in den Mischkammern anstehenden Druck der Verdünnungsflüssigkeit, welcher durch eine zu verwendende "Gleichdruckarmatur" auf einen konstanten Druckwert zu regeln ist, ebenfalls konstant vorgegeben. Die Gefahr örtlicher Unter- und Überdosierungen des zu applizierenden Pflanzenbehandlungsmittels wird dabei weitgehend vermieden. Es ist dabei eine wirtschaftliche Einspeisung mit einer einfachen Antriebsregelung der Dosierpumpe möglich. Da die Mischkammern und die diesen zugeordneten Hubkolbenpumpen unmittelbar an den Spritzdüsen angeordnet sind, können Reste des Pflanzenbehandlungsmittels nicht mehr in längeren Leitungswegen vor den Spritzdüsen einstehen. Es kann insofern eine übergangslose Einstellung der Konzentration und Arten der Spritzbrühe bei einer vorzunehmenden Änderung der Dosierung oder Art des Pflanzenbehandlungsmittels oder der Fahrgeschwindigkeit der Zugmaschine vorgenommen werden. Insofern kann insbesondere zunächst eine Verdünnungsflüssigkeit in Form von Wasser über die Spritzdüsen gefördert werden, bis der von den Dosierpumpen erzeugte Konzentrat-Druck den Förderdruck übersteigt und den Öffnungsdruck von 6 bar erreicht.

Aufgrund der Gleichdruck-Regelung wird im übrigen erreicht, daß über den "Spritzdüsen" sich in Abhängigkeit von den Betriebsbedingungen kein ändernder Druckabfall einstellt. Die an den Düsen sich ausbildende Tröpfchengröße bleibt dabei gleich groß, so daß insofern auch nicht mehr die Gefahr von Fehldosierungen bzw. örtlicher Unter- oder Überdosierungen oder einer Abdrift des Sprühnebels besteht.
Eine hohe Dosiergenauigkeit wird dabei bei einem Antrieb der Hubkolbenpumpe durch einen elektromagnetischen Wandler in Form eines elektromagnetischen Linearantriebes erreicht, dessen Spule entsprechend dem Hubanker-oder Tauchspulenprinzip in einem in seiner Frequenz regelbaren elektromagnetischen Feld auf- und abbewegbar ist.

Die mechanische Anpassung des Hubvolumens der Hubkolbenpumpe an die über die Spritzdüsen der Teilbreiten auszutregende Menge der Spritzbrühe erfolgt dabei über eine Veränderung des Arbeitshubes der Hubkolbenpumpe in vorteilhafter Weise durch bloße Vor- und/oder Hinterlegung von Distanzscheiben gegen die Dichtmanschette des Kolbens der Hubkolbenpumpe, wobei die Distanzscheiben als Justierung der Dichtmanschette dienen und somit den Arbeitshub einstellen. Es ist dabei eine Einstellung des Arbeitshubes jeweils entsprechend der vorgesehenen Staffelung der Teilbreiten des Spritzgestänges in Schritten von z.B. 2 m - 4,5 m möglich. Insofern ist das Fördervolumen der Hubkolbenpumpen einstellbar und relativ zueinander veränderbar.

Gemäß der erfindungsgemäßen Lösung ist ferner vorgesehen, daß auf jeder Teilbreite des Spritzgestänges und für jedes Pflanzenbehandlungsmittel je eine Mischkammer und eine Dosierpumpe eingesetzt ist.

Auf diese Weise können gleichzeitig mehrere Spritzmittel verarbeitet werden, ohne daß die Mischbarkeit der Spritzmittel Voraussetzung dafür ist. Vorteile eines derart ausgebildeten Spritzgerätes bestehen darin, daß
1. die Notwendigkeit zu Vermischen unterschiedlicher Pflanzenbehandlungsmittel vor dem Verspritzen entfällt. Da für jedes Pflanzenbehandlungsmittel eine Pumpe vorgesehen ist, entfällt das Mischen vor der Ausbringung. Die Ausbringung des Mittels wird gleich in l/ha in die Bedieneinrichtung eingegeben. Die Berechnung der Pumpfrequenz wird von der Elektronik der Rechen- und Steuereinheit übernommen, wobei eine aufwendige manuelle Berechnung sowie Ausliterung oder ein Abwiegen des Pflanzenbehandlungsmittels entfällt. Ein Rührwerk für das Herstellen und Aufrechterhalten einer Emulsion oder Suspension entfällt, da diese unmittelbar vor der Ausbringung in ausreichender Güte hergestellt wird. Ebenso sind entsprechend der Anzahl der Einspritz- bzw. Hubkolbenpumpen mehrere Pflanzenbehandlungsmittel gleichzeitig ausbringbar. Die Verträglichkeit der Pflanzenbehandlungsmittel untereinander spielt, insbesondere die von verschiedenen Herstellern, keine Rolle. Jedes Pflanzenbehandlungsmittel wird getrennt eingespeist und gemeinsam gespritzt. Die Anzahl der gleichzeitig ausbringbaren Mittel hängt somit nur noch von der Anzahl der Dosiereinrichtung je Teilbreite ab.
2. Es besteht eine Unabhängigkeit der Ausbringung des Pflanzenbehandlungsmittels von der Fahrgeschwindigkeit. Die momentante Fahrzeuggeschwindigkeit wird dabei von der Bedieneinrichtung des Spritzgerätes erfaßt und fließt in die Steuerung der Einspritzpumpe ein. Daraus resultiert einerseits eine homogene Dosierung und andererseits eine Entlastung des Landwirts.
3. Die Ausbringung des Pflanzenbehandlungsmittels ist unabhängig vom Wasserstrom und Wasserdruck bzw. dem der Verdünnungsflüssigkeit. Bei Schwankungen der Fahrzeuggeschwindigkeit wird die Konzentration des Pflanzenbehandlungsmittels korrigiert, so daß die Ausbringung des Pflanzenbehandlungsmittels pro Flächeneinheit immer konstant bleibt. Zudem wird durch den Einsatz der Konstantdruckregelung zur Erhaltung eines konstanten geeigneten Spritzdruckes für das Wasser die Gefahr der Abdrift völlig ausgeschaltet, da das Tropfenspektrum der Spritzbrühe immer ideal ist.
4. Eine Entsorgung von Restmengen entfällt, da das Spritzgut während der Ausbringung bedarfsgerecht hergestellt wird. Dies ist ein entscheidender Vorteil gegenüber herkömmlichen Geräten, da dies Zeit und Geld für die Entsorgung spart, vor allem aber die Gefahr der Abwasserkontamination ausschließt. Ebenso entfällt eine manuelle Reinigung des Spritzgerätes, da zum Ende der Ausbringung ein Spülvorgang der kurzen, mit Pflanzenbehandlungsmittel in Kontakt gekommenen Leitungsstücke vorgesehen ist, der das Spritzgerät automatisch reinigt.
   Die Steuerung der Spritzeinrichtung, insbesondere der Hubkolbenpumpe, erfolgt dabei über eine Bedieneinrichtung, welche in der Führerkabine des Traktors im allgemeinen untergebracht ist. Die Eingangsgrößen sind im wesentlichen
   a) die Ausbringung (l/ha, manuell einlesbar),
   b) die Fahrgeschwindigkeit, welche mit Radar oder mit einem Sensor gemessen wird,
   c) die Angabe, welcher Dosierapparat einer Teilbreite aktiviert wird, da bei Ausbringung mehrerer Pflanzenbehandlungsmittel unterschiedliche Dosierungen die Regel sind, oder auf verschiedenen Anbauflächen verschiedene Spritzmittelzusammensetzungen erforderlich sind, und
   d) die manuelle Korrektur der Ausbringung im Bereich von +/- 10 % während des Spritzvorganges und
   e) weitere Prozeßparameter, wie z. B. des Behälters für das Druckwasser bzw. die Verdünnungsflüssigkeit und des Behälters für das Pflanzenbehandlungsmittel.

Als Ausgang der Steuerung ist ein Leistungsausgang zur Ansteuerung der Pumpen für die Förderung des Pflanzenbehandlungsmittels und der Verdünnungsflüssigkeit sowie für eine Warnmeldung bei leeren Pflanzenbehandlungs- bzw. Verdünnungsflüssigkeitsbehältern vorgesehen.

Die Bedieneinrichtung errechnet aus den Vorgaben die Frequenz für jede Spritzmittelpumpe und regelt sie entsprechend der aktuellen Geschwindigkeit nach. Wird die Mindestgeschwindigkeit von 5 km/h unterschritten, wird ein Warnsignal gegeben.

Entsprechend dem Fördervolumenstrom der eingangs genannten herkömmlich bekannten Spritzgeräte weist dabei das erfindungsgemäße Gerät zum Applizieren von Pflanzenbehandlungsmitteln ebenfalls einen Fördervolumenstrom von 65 - 320 l/min auf, wobei der Antrieb des elektromagnetischen Wandlers über den Generator der Zugmaschine erfolgt.

Von besonderem Vorteil der Verwendung eines "elektromagnetischen Wandlers" zum Antrieb der Hubkolbenpumpe ist dabei, daß die Kolbengeschwindigkeit nicht mit der Hubfrequenz der Hubkolbenpumpe zunimmt, wie dies bei dem Antrieb der Hubkolbenpumpe z. B. über einen Kurbeltrieb mittels einem drehzahlregelbaren Gleichstrommotor oder einer Bohrmaschine der Fall ist.

Bei einem elektromagnetischen Antrieb ist vielmehr die Kolbengeschwindigkeit nahezu gleichbleibend, was sich insofern auf die Fördercharakteristik der Dosierpumpe positiv auswirkt. Die Kennlinie der Fördercharakteristik des Fördervolumenstromes gegen der Hubfrequenz ist dabei insofern optimal, als das Verhältnis der Fördervolumenströme über einem großen Frequenzbereich von z. B. 5 - 100 Hz bei unterschiedlichen Pflanzenbehandlungsmitteln (z. B. im Vergleich von "Wasser" gegenüber einer "Polymer-Lösung") fast gleich ist. Die Abweichung zwischen beiden Medien läßt sich dabei im Bereich von 5 - 100 Hz ohne Schwierigkeiten auf unter 4 % einstellen, so daß die Grenzwerte der Biologischen Bundesanstalt von +/- 10 % weit unterschritten werden.

Bei der Ausbildung der Hubkolbenpumpe gilt es dabei, den Kolbendurchmesser derart zu wählen, daß durch Reduzierung bzw. Erhöhung des Arbeitshubes von z. B. 0,2 mm eine Veränderung bezogen auf Fördervolumen zur Spritzbreite um jeweils 0,5 m möglich ist. Dies erfolgt dabei in vorteilhafter Weise durch Verlagerung der Dichtmanschette.

Da in der Praxis die Dosiermenge von Pflanzenbehandlungsmitteln stets in l/ha bei Flüssigkeiten angegeben wird, ist dabei die Dosiermenge des Pflanzenbehandlungsmittels als Parameter beibehalten. Die gestaffelten einzustellenden Ausbringmengen sind dabei den entsprechenden Frequenzen der Hubkolbenpumpe so zuzuordnen, daß der Mittelwert stets bei 0 % Abweichung liegt. Mit der Hubkolbenpumpe läßt sich dabei auch die kleinste vertretbare Hubfrequenz überprüfen, bei welcher noch eine ausreichende Vermischung von Pflanzenbehandlungsmittel und Verdünnungsflüssigkeit erreichbar ist.

Bei 2 Hz läßt sich dabei noch eine Toleranz von +12,5 % - 12,4 % erreichen. Die zulässige Toleranz laut Biologischer Bundesanstalt beträgt dagegen +/- 15 %.

Eine Verbesserung der Vermischung läßt sich noch wie folgt erreichen:
Setzt man eine Einstiegsfrequenz von 1,8 Hz und ein Volumen pro Hub von 112 mm³ voraus, ergibt dies eine Ausbringmenge von 0,25 l/ha bei 6 km/h. Die Ausbringmenge 6 l/ha ist dabei das 24-fache, so daß dies einer Hubfrequenz von 43,2 Hz entspricht. Rechnet man noch eine Geschwindigkeitserhöhung bis 10 km/h hinzu, ergibt dies eine Endfrequenz von 72,01 Hz. Die maximal nutzbare Frequenz ist ca. 100 Hz, es verbleiben etwa 28 Hz als Sicherheit.

In vorteilhafter Weise ist im übrigen vorgesehen, daß das Gerät zum Applizieren von Pflanzenbehandlungsmitteln von der Gleichdruck-Regelung für die auszubringende Spritzbrühe bzw. die Verdünnungsflüssigkeit in Notfällen auf eine "übliche geschwindigkeitsproportionale Druckregelung" für die zuzuführende Verdünnungsflüssigkeit umschaltbar ist. Insofern kann statt der Verdünnungsflüssigkeit unmittelbar die in einem Behälter in gewünschter Konzentration angesetzte Spritzbrühe gefördert und ausgebracht werden.

Weitere vorteilhafte Ausbildungen der Erfindung ergeben sich aus den Patentansprüchen und der folgenden Erläuterung der Erfindung anhand einer Ausführungsform.

Die Erfindung wird im folgenden anhand einer bevorzugten Ausführungsform, welche in den Zeichen schematisch dargestellt ist, näher erläutert.

In den Zeichnungen zeigen:
- Figur 1:: Eine schematische Darstellung des Gerätes zum Applizieren von Pflanzenbehandlungsmitteln unter Dosierung des Konzentrates in geschwindigkeitsabhängiger Direkteinspeisung in unabhängiger Weise für mehrere Teilbereiche des Spritzgestänges mit Andeutung einer Druck- bzw. Durchflußregelung für die Verdünnungsflüssigkeit;

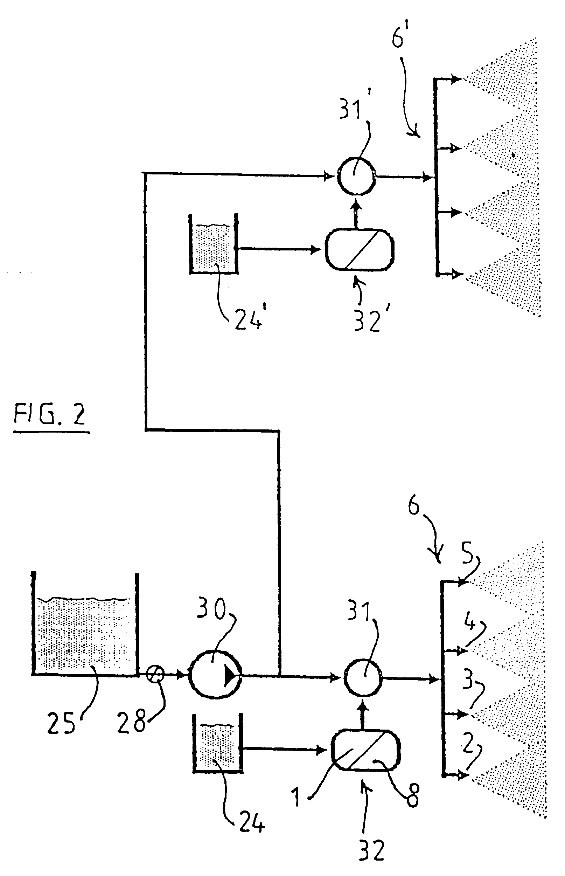

- Figur 2:: Eine schematische Darstellung der Speisung der Spritzdüsen einer Teilbreite des Spritzgestänges unter Darstellung der Pumpe der Verdünnungsflüssigkeit und der Dosiervorrichtung und Pumpe für das Konzentrat sowie der gemeinsamen Mischkammer;
- Figur 3:: In schematischer Darstellung den Aufbau der Dosiervorrichtung mit Hubkolbenpumpe für das Konzentrat;

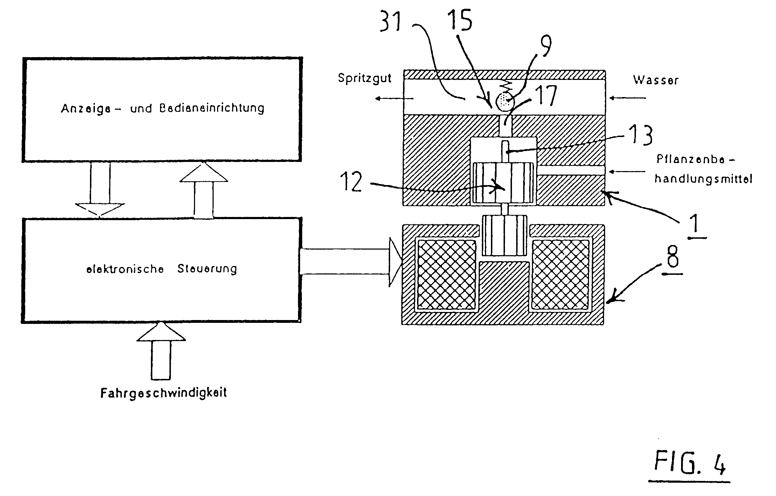

- Figur 4:: Eine Darstellung des elektromagnetischen Antriebes der Hubkolbenpumpe mittels eines elektromechanischen Wandlers und der verwendeten elektronischen Steuerungseinheiten und Anzeige- bzw. Bedienungseinrichtungen zur Erreichung der geschwindigkeitsabhängigen Direkteinspeisung des Pflanzenbehandlungsmittels (Konzentrat), und zwar sowohl für den Fall der Druckregelung als auch der Querschnitts- bzw. Durchflußregelung der Verdünnungsflüssigkeit mit sich verändernder Fahrgeschwindigkeit des Gerätes zum Applizieren von Pflanzenbehandlungsmitteln in Form einer fahrbaren Feldspritze oder eines fahrbaren Sprühgerätes.

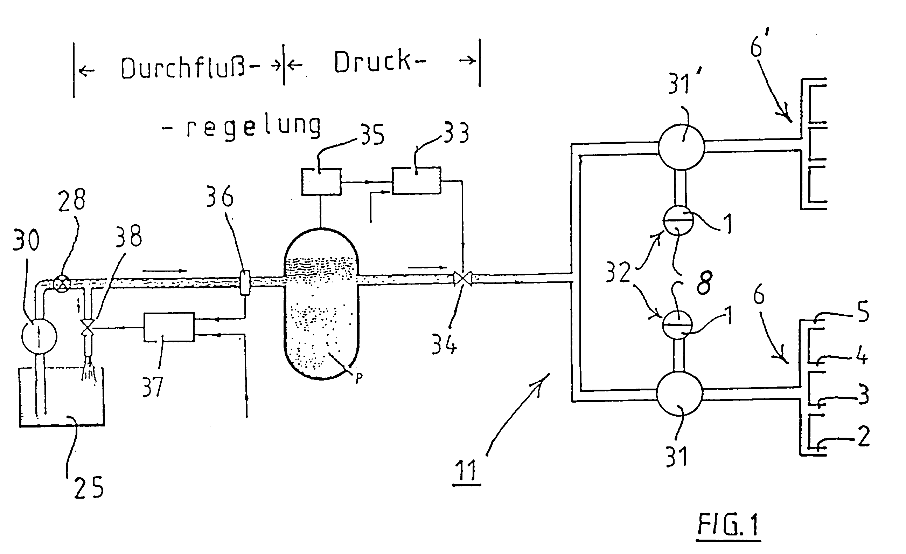

In Figur 1 erkennt man, daß die Verdünnungsflüssigkeit zur Vermischung mit dem Pflanzenbehandlungsmittel (Konzentrat) zur Herstellung der Spritzbrühe in der gewünschten Konzentration mit einer Pumpe (30) aus einem Vorratsbehälter (25) in eine Mischkammer (31) geleitet wird. In diese Mischkammer wird die Verdünnungsflüssigkeit mit aus einem Konzentratbehälter (24) über eine Dosiervorrichtung (32) eingespritztes Konzentrat (Pflanzenbehandlungsmittel) vermischt und unmittelbar den Spritzdüsen (2, 3, 4, 5) eines Spritzgestänges (11) zugeführt.

Obwohl die Pumpe (30) für die Verdünnungsflüssigkeit durch die geschwindigkeitsabhängige Zapfwelle bzw. Antriebswelle des Zugfahrzeuges bzw. der die Feldspritze tragenden verfahrbaren Landmaschine angetrieben wird, wird dabei die Verdünnungsflüssigkeit von der Pumpe (30) dem Vorratsbehälter (25) unter Durchführung einer Druckregelung entnommen,so daß die Verdünnungsflüssigkeit unter konstantem Flüssigkeitsdruck dem Leitungssystem bzw. der Mischkammer (31) zugeführt wird. Die Verdünnungsflüssigkeit wird dann in der Mischkammer (31) mit der aus einer Dosierpumpe (1) entsprechend der momentanen Fahrgeschwindigkeit des Spritzgerätes exakt dosierten Konzentratmenge vermischt. Die Dosierpumpe und Mischkammer ist dabei unmittelbar vor den Spritzdüsen einer bestimmten Teilbreite (6) des Spritzgestänges (11) angeordnet. Da der Druck der Spritzbrühe bzw. der Verdünnungsflüssigkeit durch die in Figur 1 dargestellte Druckregelung auf einem konstanten Wert gehalten wird, entsteht über den Spritzdüsen des Spritzgestänges am Auslaß und Einlaß keine zeitliche Druckänderung, so daß für einen vorgegebenen Spritzdruck die Spritzbrühe mit gleichbleibendem Tropfenspektrum ausgebracht wird. Entsprechend der in Figur 1 dargestellten Druck- und Durchflußregelung wird zur Druckregelung in der Zuführungsleitung zur Mischkammer (31) bzw. dem Vorratsbehälter (25) eine Druckmessung durchgeführt. Dieser Wert wird als Ist-Wert gleichzeitig mit dem Druck Soll-Wert einem Regler (33) zugeführt, welcher ein Stellventil (34) in der Zuleitung zur Mischkammer geeignet in der Größe der Querschnittsöffnung verstellt, so daß sich in der Mischkammer jeweils trotz unterschiedlicher Geschwindigkeiten des Spritzgerätes Verdünnungsflüssigkeit mit dem gleichen Flüssigkeitsdruck befindet.

Wie in Figur 1 dargestellt, wird zur Durchflußregelung (Querschnittsregelung) nicht ein Druckmeßgerät (35) verwendet, sondern ein Gerät (36) zur Durchflußmessung. Dieser Volumenstrom wird als Ist-Wert einem Regler gleichzeitig mit dem Volumenstrom Soll-Wert zugeführt, wobei dieser Regler (37) ein Stellventil (38) in einem Bypaß zur Pumpe (30) ansteuert, so daß ein Volumenstrom in den Vorratsbehälter (25) zurückführbar ist.

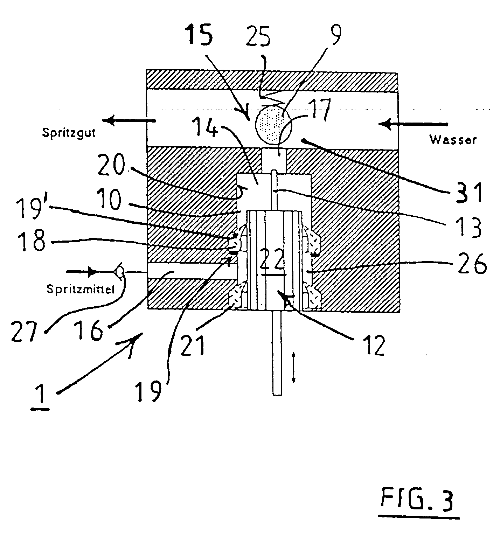

Die als Teil der Dosiervorrichtung (32) verwendete Dosierpumpe (1) ist dabei gemäß Figur 3 als Hubkolbenpumpe ausgebildet, welche gemäß Figur 4 über einen elektromechanischen Wandler (8) auf Elektromagnet-Basis betrieben wird, welcher seinerseits über übergeordnete Bedieneinrichtungen geschwindigkeitsabhängig und in Abhängigkeit von der verwendeten Druckregelung oder Durchflußregelung gesteuert wird. Die Steuerung des elektromagnetischen Wandlers (8) erfolgt dabei durch eine Steuerung der Frequenz des Stromes in dem Elektromagneten des elektromagnetischen Wandlers, wobei diese Frequenz in Abhängigkeit von der Geschwindigkeit des Zugfahrzeuges bzw. des Spritzgerätes verändert wird. Die Hubkolbenpumpe (1) weist dabei ein Auslaßventil (15) auf, welches als Rückschlagventil ausgebildet ist und eine Auslaßöffnung (17) des Kolbenraumes (10) aufweist, in welcher der Kolben (12) mit seinem mittigen auf der oberen Standfläche befindlichen Stößel (13) gegen den Ventilkörper (9) des Rückschlagventiles (15) längs verschiebbar ist. Ein Einlaßventil für das Konzentrat zum Kolbenraum (10) wird dabei durch ein 2-Wege-Ventil (27), eine Zuleitung (16) und durch einen konzentrischen Ringraum (26) gebildet, welcher zwischen der Außenfläche (22) des zylinderförmigen Hubkolbens (12) und einer oberen Dichtmanschette (18) und einem unteren Dichtring (21) gebildet wird, wobei Dichtmanschette und Dichtring den Abstand der Wandung (20) des Kolbenraums (10) zur Außenfläche (22) des Hubkolbens (12) ausfüllen.

Die Dichtmanschette (18) ist dabei in einem losen Ring an der Wandung (20) des Kolbenraumes (10) bzw. des Verdränger- oder Verdichtungsraumes (14) angeordnet. Dieser Ring wird mit 5 gleich dicken Distanzscheiben (19) zum Kolbenraum (10) axial eingespannt. Der Kolbenraum (10) ist ohne Hinterschnitt und Kanten ausgeführt, so daß sich, bei senkrechter Lage, keine Luftblasen ansammeln, die einen kompressiben Puffer bilden können. Der Kolben (12) hat einen angedrehten Stößel (13), der das Auslaßventil (15) zwangsweise öffnet. Der Öffnungsspalt des Ventils ist begrenzt und gleichzeitig die Hubbegrenzung des Kolbens (12). Der Hub des Kolbens setzt sich dabei zusammen aus
a) Leerhub = Weg bis zum Eintauchen in die Dichtungsmanschette(18),
b) Arbeitshub = Weg vom Eintauchen in die Dichtungsmanschette (18) und Öffnen des Rückschlagventils (15), sowie
c) Öffnungshub = Weg der Ventilöffnung.

Fördervolumen pro Hub, Kolbendurchmesser und die Stärke der Distanzscheiben sind so abgestimmt, daß bei Hinterlegung der Distanzscheiben (19) zur Dichtmanschette (18) ein Einspeisevolumen entsprechend der Unterteilung des Spritzgestänges (11) in einzelne Spritzbreiten von 2 m vorhanden ist. Durch Vor- und/oder Hinterlegung ist eine Erweiterung der Spritzbreite, bezogen auf das Einspeisevolumen, um jeweils 0,5 m von 2,0 - 4,5 m möglich.

Das Auslaßventil bzw. Rückschlagventil (15) ist mit einer Feder beaufschlagt. Der Öffnungsdruck entspricht dabei einem Spritzdruck im Spritzrohr von ca. 5 bar. Durch den konstanten Öffnungsdruck sind Schwankungen des Einspeisevolumens, hervorgerufen durch unterschiedliche Arbeitsdrücke im Spritzrohr bzw. der Mischkammer (31) eliminiert, wie auch Betriebsänderungen der Dosierpumpe.
Das Auslaßventil (15) befindet sich dabei oberhalb der Auslaßöffnung (17) der Hubkolbenpumpe (1) in der Mischkammer (31), wobei über die Feder (25) die Schließung des Ventilkörpers (9) erreicht wird, sofern im Verdichtungsraum (14) der Hubkolbenpumpe nicht ein Verdichtungsdruck erreicht wird, welcher größer als der Spritzdruck im Spritzrohr von ca. 5 bar ist.

Zur Durchspülung der Dosieraggregate in den Teilbereichen (6) des Spritzgestänges (11) ist ein manuell zu öffnender Bypaß vorgesehen, so daß Verdünnungsflüssigkeit aus der Mischkammer (31) in den Ansaugraum fließt und zugleich mittels eines Rückschlagventils die Spritzmittelzufuhr geschlossen wird.

Über eine elektromagnetische Teilbreitenabschaltung des Spritzgestänges (11) ist es dabei möglich, die jeweils gewünschte Dosierpumpe (1) zu beaufschlagen, so daß eine wirtschaftliche Einspeisung und eine Ausbringung der Pflanzenbehandlungsmittel in der gewünschten Breite des Spritzgestänges möglich ist. Es sind dabei Teilbreiten von 2 bis 4,5 m möglich.

Die Dosierpumpen (1) sind jeweils in einer Schlauchleitung mit einem Mindestabstand von 20 cm von der ersten Düse einer Teilbreite (6) des Spritzgestänges (11) montiert. Sinnvoll ist es, die Einspeisung mittig einer Teilbreite (6) vorzunehmen. Dies reduziert die Fließzeit zur letzten Spritzdüse um ca. 50 %. In der Nähe der Dosierpumpe (1) ist der Spritzmittel- bzw. Konzentratbehälter (Pflanzenbehandlungsmittel) auf dem Spritzgestänge so zu lagern, daß eine direkte Entnahme mittels eines Schlauches möglich ist. Da das Fördervolumen in den Teilbereichen des Spritzgestänges im Bereich von 2 - 4,5 m angepaßt wird, arbeitet die Dosierpumpe (1) über das gesamte Spritzgestänge (11) jeweils mit gleicher Frequenz. Die geringe Baugröße: Durchmesser ca. 10 cm, Höhe ca. 18 cm, Gewicht ca. 2kp einer Dosierpumpe ermöglicht die Montage eines zweiten, evtl. dritten und vierten Pumpen- bzw. Dosieraggregatsatzes für einen einzigen Teilbereich, wobei jeder Satz mit einer eigenen Frequenz arbeiten kann und beliebig, auch Teilbereiche, zu- und abgeschaltet werden können.
Eine Begrenzung in der Anzahl der Dosierpumpen bzw. Dosieraggregatsätze ist nur durch die Stromaufnahme, bzw. durch das Leistungsvermögen des Generators der Zugmaschine gegeben.

## Patentansprüche

1. Fahrbares Spritzgerät in Form eines mittels einer Zugmaschine verfahrbaren Anhängers oder einer Einheit einer Einheit zum direkten Anbau an eine Landmaschine, zum Applizieren von Pflanzenbehandlungsmitteln mit einer Spritzvorrichtung, die aus einem Spritzgestänge (11) und einer Anzahl von an dieser vorgesehenen, mit jeweils einer Vielzahl von Spritzdüsen (2, 3, 4, 5) besetzten Teilbreiten (6, 6') besteht,
mit Tanks (24, 24'; 25) für jedes Spritzmittelkonzentrat sowie für eine Verdünnungsflüssigkeit, insbesondere Wasser,
mit Dosiervorrichtungen (32; 32') zum dosierten Einspritzen des oder der Konzentrate in eine über eine Druckwasserpumpe (30) mit Verdünnungsflüssigkeit versorgte Mischkammer (31, 31'),
wobei während des Betriebes über eine Rechen- und Steuereinheit unter Berücksichtigung der je Flächeneinheit auszubringenden Menge des bzw. der Behandlungsmittel die Steuerung der Dosiervorrichtungen (32; 32') abhängig von den Fahrgeschwindigkeitsänderungen des Spritzgeräts so erfolgt, daß die durch die Spritzdüsen applizierte Ausbringung des Konzentrats pro Flächeneinheit konstant bleibt
und wobei das Konzentrat erst bei Überschreiten eines Mindestausstoßdruckes in die Mischkammer ausstoßbar ist,
**dadurch gekennzeichnet**, daß unmittelbar vor jeder Teilbreite (6, 6') jeweils eine der einzelnen Teilbreite (6, 6') zugeordnete Mischkammer (31, 31') mit Dosiervorrichtung (32;32') vorgesehen ist, jede Dosiervorrichtung (32;32') eine der vorgesehenen Zahl der unterschiedlichen Spritzmittel entsprechende Anzahl in die zugeordneten Mischkammern (31;31') einmündender Hubkolbenpumpen (1) aufweist,
das Fördervolumen pro Hub der Hubkolbenpumpen (1) während des Betriebes konstant vorgebbar und vor Fahrtbeginn entsprechend der Größe der Teilbreite jeweils einzeln einstellbar ist,
die Hubkolbenpumpen (1) über elektromagnetische Wandler (8) mit veränderbarer Hubfrequenz angetrieben sind,
die Veränderungen der Hubfrequenz durch die aus der abhängig von der jeweils momentanen Fahrgeschwindigkeit des fahrbaren Spritzgeräts erzeugten, zu dieser äquivalent sich ändernden Steuerfrequenz veranlaßt sind,
durch Einrichtungen (33 - 37) zum Konstanthalten des Druckes oder der Durchsatzmenge pro Zeiteinheit der Verdünnungsflüssigkeit diese den Mischkammern (31;31') in von Fahrgeschwindigkeitsänderungen unabhängiger, vor der Ausbringung festlegbarer zeitlich gleichbleibender Menge und mit gleichbleibendem Druck zugeführt wird.

2. Spritzgerät nach Anspruch 1,
**dadurch gekennzeichnet**, daß die gleichzeitig in Betrieb befindlich Hubkolbenpumpen (1) des Spritzgestänges (11) jeweils für ein bestimmtes Konzentrat mit der gleichen Hubfrequenz angetrieben sind.

3. Spritzgerät nach Anspruch 1 oder 2,
**dadurch gekennzeichnet**, daß der elektromagnetische Wandler (8) für den Antrieb der einzelnen Hubkolbenpumpen (1) ein elektromagnetischer, Hubanker- oder Tauchspul-betriebener Linearantrieb ist.

4. Spritzgerät nach einem der Ansprüche 1 - 3,
**dadurch gekennzeichnet**, daß der Arbeitshub der Hubkolbenpumpe (1) vor der Inbetriebsetzung des Spritzgeräts durch Veränderung des wirksamen Kolbenhubs durch die Anbringung von Distanzscheiben (12) bzw. durch Verschieben einer Dichtmanschette (18) der Pumpe (1) veränderbar ist.

5. Spritzgerät nach einem der Ansprüche 1 - 4,
**dadurch gekennzeichnet**, daß bei der an jeder Teilbreite (6,6') vorgesehenen Anordnung mehrerer, der Zahl der vorgesehenen unterschiedlichen Behandlungsmittel entsprechender Hubkolbenpumpen (1) jeder Hubkolbenpumpe (1) eine eigene Mischkammer (31;31') zugeordnet ist.

6. Spritzgerät nach einem der vorhergehenden Ansprüche,
**dadurch gekennzeichnet**, daß das zwischen jeder Hubkolbenpumpe (1) und der zugehörigen Mischkammer (31;31') vorgesehene Ventil (15) ein durch eine Schließfeder (25) belastetes Kugelsitzventil (15) ist, dessen Öffnungsdruck auf den vorgesehenen, über dem an den Spritzdüsen (2 bis 5) anliegenden Spritzdruck liegenden Mindesteinspritzdruck einstellbar ist.

7. Spritzgerät nach einem der vorangehenden Ansprüche,
**dadurch gekennzeichnet**, daß auf der zum Auslaß (17) weisenden Fläche des Kolbens (12) der Hubkolbenpumpe (1) ein im Endbereich des Kolbenhubs wirksam werdender Stößel (13) zum zwangsweisen Anheben der Ventilkugel (9) angesetzt ist.

8. Spritzgerät nach einem der vorangehenden Ansprüche,
**dadurch gekennzeichnet**, daß der Durchmesser des Zylinders für den Kolben (12) der Hubkolbenpumpe (1) größer ist als der Kolbendurchmesser und in die Innenfläche des Zylinders (20) mit axialem Abstand voneinander zwei umlaufende, jeweils eine Dichtmanschette (18; 21) in Form von Lippendichtungen aufnehmende Nuten eingearbeitet sind,
daß zwischen den beiden Dichtmanschetten (18, 21) eine durch ein Rückschlagventil (27) gegen Rückfluß aus dem Zylinder (20) gesicherte Konzentratzuführung(16) in Form einer Querbohrung in den Zylinder (20) mündet,
daß der untere Totpunkt des Kolbens (12) zwischen den zwei Dichtmanschetten (18, 21) derart angeordnet ist, daß die obere Kolbenbegrenzung den Flüssigkeitseintritt aus dem Querkanal (16) in den nach Schließen des Ventils (15) unter Unterdruck stehenden Kolbenraum (10) freigibt, und
daß der obere Totpunkt in der Nähe des Einlaufs der Ausstoßbohrung (17) liegt.

9. Spritzgerät nach einem der vorangehenden Ansprüche,
**dadurch gekennzeichnet**, daß als Hubkolbenpumpen (1) Tandemaggregate mit zwei gegenläufig arbeitenden Pumpen mit jeweils gleichem, zusamen das vorgesehene Hubvolumen je Hubkolbenpumpe (1) ergebendem Hubvolumen vorgesehen sind.

10. Spritzgerät nach Anspruch 9,
**dadurch gekennzeichnet**, daß jede Pumpe des Tandemaggregats mit einem eigenen Antrieb versehen ist.

11. Spritzgerät nach einem der vorangehenden Ansprüche,
**dadurch gekennzeichnet**, daß in der zu den Mischkammern (31;31') führenden Leitung für die Verdünnungsflüssigkeit ein elektrisch betätigbares 2-Wege-Ventil (28) vorgesehen ist.

12. Spritzgerät nach einem der vorangehenden Ansprüche,
**dadurch gekennzeichnet**, daß eine Warneinrichtung zur Anzeige leergelaufener Behälter (24, 25) vorgesehen ist.

## Claims

1. Mobile spraygun which can either be set up on a trailer and drawn by a tractor or as a unit which can directly be mounted on a farming equipment in order to apply plant protective agent by means of a spraying device consisting of a spraying frame (11) and a number of single part frames (6. 6') composed by several spray nozzles (2. 3. 4. 5) and being connected to the main frame, which has tanks (24. 24'; 25) for each plant protective concentrate as well as for the diluent, especially water, which has dose adjustments (32. 32') controlling the amount of plant protective concentrate mixed in the so called mixing unit (31. 31') with the diluent supplied to this unit by means of a water pressure pump (130),
whereas during operation - considering the quantity of plant protective(s) to be supplied per area - dose pumps (32. 32') are controlled by a counting meter and a controlling device and are dependent on changes in speed of the spray gun so that the concentrate supplied through the spray nozzles remains constant per surface unit,
the concentrate can only be supplied into the mixing unit when a minimal output pressure is reached **characterized** in that each part of the frame (6. 6') has its own mixing device (31. 31') with dose adjustment (32. 32'), and
that each dose adjustment (32. 32') has its own lifting pump (1) which join the attached mixing units (31. 31') for each plant protective foreseen,
that during operation the supply volume for each stroke of the lifting pumps (1) can constantly be chosen and before operation it can independently be set according to the dimensions of the part frame,
that the lifting pumps (1) are powered by electromagnetic transformers (8) so that stroke frequency can be modified and this stroke frequency changes depending on actual speed of the farming equipment, and equally control frequency changes depending on speed, and that there are furthermore units (33 - 37) to keep diluent pressure or quantity supplied to the mixing units (31. 31') constant per period of time given, independently of the actual speed, and quantity to be supplied should be determined before supply, whereas quantity and pressure remain constant per period of time given.

2. Spray gun according to claim 1,
**characterized** in that the lifting pumps (1) of the spray frame (11) which are simultaneously working are powered by the same stroke frequency.

3. Spray gun according to claims 1 or 2,
**characterized** in that the electromagnetic transformer (8) to power each lifting pump (1) is an electromagnetic linear inducement driven by rotor induction or moving coil.

4. Spray gun according to claims 1 - 3,
**characterized** in that the lifting capacity of the lifting pump (1) can be adjusted before setting the spray gun in motion by changing the effective piston stroke with washers (12) being fixed resp. with a gasket (18) to the pump (1) being displaced.

5. Spray gun according to claims 1 - 4,
**characterized** in that each part of the frame (6. 6') foresees a number of lifting pumps (1) corresponding to the number of various plant protectives to be used and that each lifting pump (1) has its own mixing unit (31. 31').

6. Spray gun according to one of the claims mentioned above, **characterized** in that the valve, which is foreseen to be fixed between every piston pump (1) and the annexed mixing chamber (31. 31'), is a ball seat valve (15) on which tension is put by a closing spring and whose outlet pressure can be set to a minimal outlet pressure foreseen, which is above the outlet pressure at the spray nozzles (2 to 5).

7. Spray gun according to one of the claims mentioned above, **characterized** in that on the side directed to the outlet (17) of the piston (12) to the lifting pump (1) a plunger (13) is mounted to be effective at the end of the piston stroke and to be forced to lift there the valve ball (9).

8. Spray gun according to one of the claims mentioned above, **characterized** in that the diameter of the cylinder to the piston (12) to the lifting pump (1) is higher than piston diameter and that on the inner surface of the cylinder (20) there are two rotating grooves with axial distance to each other, which take each of them up a gasket (18. 21) having the shape of lip gaskets,
that between these two gaskets (18. 21) there is a guide for concentrate (16) into the cylinder (20) having the shape of a transverse bore; this is realised by a non-return valve (27) against reflux out off the cylinder (2),
that the lower dead point of the piston (12) is mounted between the two gaskets (18. 21) in such a manner that the upper piston limit releases the outlet of the fluid from the transverse bore (16) into the piston chamber (10) which works at reduced pressure after the valve has been closed (15), and that the upper dead point of the piston (12) is close to the opening to the outlet bore (17).

9. Spray gun according to one of the claims mentioned above **characterized** in that compound power units are foreseen for the lifting pumps (1) with two pumps working contra-rotating with each the same stroke capacity - these two pumps are to reach the scheduled stroke capacity per lifting pump (1).

10. Spray gun according to claim 9,
**characterized** in that each pump of the compound power unit has its own drive.

11. Spray gun according to one of the claims mentioned above, **characterized** in that in the pipe for the diluent which leads to the mixing units (31. 31') an electrically operated two-way-valve (28) is scheduled.

12. Spray gun according to one of the claims mentioned above, **characterized** in that a warning device indicates if containers are run idle (24. 25).

## Revendications

1. Pulvérisation mobile, sous forme d'une remorque mobile par tracteur ou sous forme d'une unité pour montage direct à une machine agricole, pour l'application de produits traitants pour plantes avec un dispositif de pulvérisation, qui se compose d'un système de tiges (11) avec un nombre prévu de sous-parties (6. 6') équipées de plusieurs tuyères à pulvériser (2. 3. 4. 5), avec des préservoirs (24. 24'; 25) pour chaque produit concentré insecticide ainsi que pour une solution de dilution, en particulier de l'eau, avec un système de dosage (32; 32') pour l'injection dosée du (des) produit(s) traitant(s) dans une mélangeuse (31. 31') qui est alimentée en solution de dilution par une pompe de pression de l'eau (30),
réglée par un compteur et un organe de commande central en raison de la quantité à distribuer par unité de surface, pulvérisé(s) par les tuyères par unité de surface, reste constante, comme le réglage du système de dosage (32. 32') dépend des changements de la vitesse de roulement du pulvérisateur mobile,
et où le produit concentré n'est éjecté dans le caisson de mélange à une pression d'expulsion minimale est dépassé, **caractérisé** en ce que caissons de mélange sont coordonnés (31. 31') à chacune des sous-parties (6. 6') et directement situés avant chaque sous-partie, équipées de systèmes de dosage (32. 32'), chaque système de dosage présentant un nombre de pompes à piston alternatif (1) entrant dans le caisson de mélange coordonné et correspondant au nombre de produits insecticide différents prévus,
le volume déplacé par coup des pompes à piston alternatif (1) prédéterminé constant, et avant le démarrage réglable par rapport à la grandeur de chaque sous-partie, les pompes à piston alternatif (1) actionnées par des transformateurs électromagnétiques (8) avec des fréquences de levage changeables, les changements des fréquences de levage nécessaires par équivalence à la fréquence de commande dépendante de la vitesse de roulement du pulvérisateur mobile, par des installations (33 - 37) pour la stabilisation de la pression ou de la quantité passée de la solution de dilution par unité de temps, la quantité injectée dans les caissons de mélange (31. 31') est indépendante des changements de vitesse de roulement, reste temporairement égale et de pression inchangée.

2. Pulvérisateur mobile suivant la revendication 1, **caractérisé** en ce que les pompes à piston alternatif (1) du système de tiges (11) fonctionnantes simultanées sont actionnées par la meme fréquence de levage pour le meme produit concentré insecticide spécifique.

3. Pulvérisateur mobile suivant la revendication 1 ou 2, **caractérisé** en ce que le transformateur électromagnétique (8) pour l'actionnement de chaque pompe à piston alternatif (1) est un actionnement linéaire réalisé électromagnétiquement, par noyau plongeur ou par bobine mobile.

4. Pulvérisateur mobile suivant les revendications 1 - 3, **caractérisé** en ce que la course de travail de la pompe à piston alternatif (1) est changeable avant la mise en marche du pulvérisateur mobile, par changement de la course de piston efficace à partir de plaques d'espacement (12) ou bien par déplacement d'une garniture cylindrique d'étanchéité (18).

5. Pulvérisateur mobile suivant les revendications 1 - 4, **caractérisé** en ce que un propre caisson à mélange (31. 31') est coordonné à chaque pompe à piston alternatif (1), le nombre de pompes correspondant au nombre des différents produits traitants prévus pour chaque sous-partie (6. 6').

6. Pulvérisateur mobile suivant les revendications précédentes, **caractérisé** en ce que la vanne prévue (15) entre chaque pompe à piston alternatif (1) et le caisson à mélange coordonné (31. 31') est un clapet à bille (15) chargé par un ressort de serrage (25), avec une pression d'ouverture réglable par rapport à la pression d'expulsion minimale pour les tuyères à pulvériser (2 à 5).

7. Pulvérisateur mobile suivant les revendications précédentes, **caractérisé** en ce que un pilon (13) efficace à la fin de la course de piston est installé sur la surface (13) en direction de l'expulsion (17) du piston (12) de la pompe (1) pour permettre le soulevement obligé de la bille de la vanne (9).

8. Pulvérisateur mobile suivant les revendications précédentes, **caractérisé** en ce que le diamètre du cylindre du piston (12) de la pompe (1) est supérieur que le diamètre du piston et a deux rainures incorporées dans les faces internes du cylindre (20) avec une distance axiale entre-eux et chacune recevant une garniture cylindrique d'étanchéité (18. 21) sous forme de joints à lèvres, entre les deux garnitures cylindriques d'étanchéité (18. 21) une alimentation de produit concentré se termine sous forme de forage transversal dans le cylindre (20) assurée contre le reflux par un clapet antiretour (27),
le point mort inférieur du piston (12) est placé entre les deux garnitures cylindriques d'étanchéité (18. 21) de telle manière que la limite supérieure du piston permet la pénétration de liquide à partir du canal transversal (16) dans la chambre dans le piston (10) qui est après la fermeture du clapet (15) à sous-pression,
et que le point mort supérieur est proche de l'entrée du forage d'expulsion (17).

9. Pulvérisateur mobile suivant les revendications précédentes, **caractérisé** en ce que les pompes à piston alternatif (1) sont des aggrégats tandem avec deux pompes travaillantes à l'inverse avec des volumes égaux donnant ensemble le volume engendré prévu par pompe à piston alternatif (1).

10. Pulvérisateur mobile suivant la revendication 9, **caractérisé** en ce que chaque pompe de l'aggrégat tandem a son propre actionnement.

11. Pulvérisateur mobile suivant les revendications précédentes, **caractérisé** en ce que un clapet à deux directions (28) électriquement activé, est situé dans les conduites pour la solution de dilution qui se terminent dans le caisson à mélange (31. 31').

12. Pulvérisateur mobile suivant les revendications précédentes, **caractérisé** en ce que un système d'alarme est installé pour la signalisation de réservoirs vidés (24. 25).
